# EUROPEAN PATENT APPLICATION

(11) **EP 3 656 813 A1**
(43) Date of publication of application: **27.05.2020**
(21) Application number: 18835680.2
(22) Date of filing: 27.03.2018
(51) Int. Cl.: C08J 11/22, C09J 155/02, C08K 5/07

(54) **METHOD FOR RECOVERING AND TRANSFORMING LIQUID ABS PLASTIC**

(30) Priority: 17.07.2017 ES 201700665
(71) Applicant: Hidalgo Navas, Jerónimo, 14800 Priego de Córdoba (Córdoba) (ES)
(72) Inventor: Hidalgo Navas, Jerónimo, 14800 Priego de Córdoba (Córdoba) (ES)
(74) Representative: Danubia Patent & Law Office LLC
(86) International application number: PCT/ES2018/000036
(87) International publication number: WO 2019/016416

(57) **Abstract**

Developed in stages: First, mix with ABS shavings / acetone, the second one varies based on the desired viscocity. Second, whip the mixture. Third, allow the mix to settle in a closed environment. Fourth, whip again until there is a homgenous mixture, and leave to settle for 24 hours.

## Description

The invention refers to the recovery and tretment of the ABS (Acrylonitrile butadiene styrene), for its use as liquid plastic to insulate, repair, model or inject on products and surfaces.

The Acrylonitrile butadiene styrene or ABS is a plastic that is very resistant to impact and widely used in the automotive industry and for other industrial and domestic uses. It is an amorphous thermoplastic It is called engineering plastic, due to it beign a plastic whose preparation and processing is more complex than common plastics, such as polyolefins (polyethylene, polypropylene).

Although they are very difficult to process, there are reagents that are obtained with acetone or propanone, a chemical compund with the formula CH3(CO)CH3 of the Ketone group that are found naturally in the environment. At room temperature, it presents as a colorless liquid with a characteristic smell. It evaporates easily, is flammable and soluble in water. Synthesized acetone is used in the manufacture of plastics, fibers, medication, and other chemical procucts, as well as a solvent of other chemical substances. Taking this into account, any person could know how to make liquid plastic, but to date, noone has patented this formula nor have they managed to homogenize the mass in order to dilute it to the point where it can be used for insulation, as if it were paint.

The advantages of this invention are the following:
- It offers a concrete method regaridng the preparation of the final liquid ABS product, both for insulation, reparation and modelling, as well as for printing.
- Given that it is a waste recovery and treatment method, the environmental impact caused by the tons of garbage that ABS products produce, accumulated for their disposal, is reduced.
- The final product offers a solution to many of the problems of daily life, from the repair of objects, insulation for flowing water, and electrical pieces etc., regardless of whether the suface is smooth or rough.

The industrial application of this invention is found within the transformation and preparation of ABS liquid plastic, and specifically, the transformation and preparation stemming from the recovery of waste of said material.

### BACKGROUND OF THE INVENTION

Although no invention identical to the one described has been found, we present the document sfound that reflect the status of the technique related to it below.

As such, document EP2252440A1 refers to a procedure for the moulding by injection of a synthetic material, particularly thermoplastic, in which the plastic material allows for the treatment, specifically in the form or particles or flakes of polymer in a fragmented state or in the form of particles, it is subjected in the first place to a pretreatment od processinf, heating and softening the plastic maerial in at least one cutting compressor that works continuously under constant mixing or movement and, if applicable, to pulverization at a temperature that is below fusion temperature, prefferably above glass transition temperature of the plastic material, using at least obe mixing or pulverizing tool for the mixing and heating of the plastic material, with working edges that act upon the material by pulverizing it and/or mixing it, thus resuting in the compressor taking the pre-treated and softened, but still fragmented plastic material directly and immediately, and withiut an intermediate phase to an injection moulding device with a screw that works in a discontinuous manner, connected to the cutting compressor directly and immediately, and that presents an endless screw that rotates in the interior of a housing and can be dispaced within it axially, o act as a piston wher eit is plastified and injected in order to generate a moulded piece, for example a pre-shape, characterized by the fact the plastic material is inserted under pressure in the entry area of the moulding device by
Injection with a screw, by means of force-feeding due to the movement of the mixing or pulverization tool. The method described by the aforementioned invention does not imply the treatment and recycling of solid ABS waste as does the main invention.

ES2550691T3 describes a method for the manufacturing of a container, which comprises the stages of preparig a mixture of a plastic material with incorporated additives; injection moulding a pre-shape that comprises at least one layer manufactured with said mixture, followed by the blowing of said pre-shape into acontainer, in which said additives are manufactured from a material that has a glass transition temperature Tg that is much higher than said plastic material, thus producing an increase in the value of the Tg temperature, which also comprises the stages of: a core shaper of grain shaper in said plastic material, a crystal in its interior and cores in said pre-shape by means of the aforementioned last addition. The method described by said invention does not imply the treatment and recycling of solid ABS waste as does the main invention.

EP0692009A1 proposes a process for the treatment of materials of used plastics or waste in order to recover the gross chemical material and the components of liquid fuel by means of depolymerization of the material used, which is transformed in a pumping phase and in a volatile phase, the volatile phase separates from a gaseous phase and a product of condensed condensable depolymerization, which is refined by means of the standard habitual processes, the pumping phase that remains once the volatile phase has separated, is subjected to hydrogenation of a liquid phase, gasification, low temperature carbonization or a combination of the indicated processes. The phases described by said treatment process of the plastic materials used is different to the proposal for the main invention described below.

Conclusions: As can be deduced from the research performed, none of the document sfound solves the problems presented, as does the proposed invention.

### DESCRIPTION OF THE INVENTION

The recovery and transformation procedure of ABS liquid plastic, the object of this invention, for the obtainment of 170-190 grams (based on the desired final viscosity) of a final product from conventional 120g test containers, is constituted from the following stages:
i. - On the basis of 110 grams of ABS shavings, add 60 grams of acetone. Based on the dsird final viscosity, ad acetone 5 grams at a time.
ii. - Whip the mixture until all the ABS is impregnated by the acetone.
iii. - Allow the mixture to settle for 5 hours in a closed container.
iv - Whip again until there is a homgenous mixture, and leave to settle for 24 hours.

For the case in which liquid ABS plastic is needed for priming, one starts fron 108 grams of ABS shavings instead of 110 grams, and also adds 35 grams of solvent.

On the other hand, once it is possible to break the union between the components of ABS, Acrylonitrile, butadiene and styrene, the mixture can be treated with refining and filtration mechanisms for its bottling, while at the same time some coloring or dye can be added to the mixture.

### DESCRIPTION OF A PREFERENTIAL COMPLETION

A preferential completion of the recovery and transformation procedure of ABS liquid plastic, the object of this invention, for the obtainment of 170 g of a final product from conventional 120g test containers, is constituted from the following stages:
i. - On the basis of 110 grams of ABS shavings, add 60 grams of acetone.
ii. - Whip the mixture until all the ABS is impregnated by the acetone.
iii. - Allow the mixture to settle for 5 hours in a closed container.
iv. - Whip again until there is a homgenous mixture, and leave to settle for 24 hours.

For the bottling of the final product, the refining and filtration phases are carried out, once the unions of Acrylonitrile, butadiene and styrene havebeen broken due to the acetone.

## Claims

1. Recovery and transformation procedure of ABS liquid plastic, characterized for being developed in the following stages (for the obtainment of 170-190 grams based on the desired final viscosity of the end product):
i. - On the basis of 110 grams of ABS shavings, add 60 grams of acetone. Based on the dsird final viscosity, ad acetone 5 grams at a time.
ii. - Whip the mixture until all the ABS is impregnated by the acetone.
iii. - Allow the mixture to settle for 5 hours in a closed container.
iv. - Whip again until there is a homgenous mixture, and leave to settle for 24 hours.

2. Recovery and transformation procedure of ABS liquid plastic, according to claim 1, characterized becuase in the case of liquid ABS plastic for priming, one starts from 108 grams of ABS shavings instead of 110 grams, and also adds 35 grams of solvent.

3. Recovery and trsnaformation procedure of ABS liquid plastic, according to claims 1 and 2, characterized becuaseonce the union between the ABS components is broken, Acrylonitrile, butadiene and styrene, one can treat the mixture with refining and filtration mechanisms for its bottling, while at the same time some coloring or dye can be added to the mixture.
